# EUROPEAN PATENT APPLICATION

(11) **EP 4 823 174 A1**
(43) Date of publication of application: **14.10.2026**
(21) Application number: 24899927.8
(22) Date of filing: 05.12.2024
(51) Int. Cl.: H04W 36/00

(54) **CONSECUTIVE HANDOVER METHOD AND APPARATUS, TERMINAL, AND READABLE STORAGE MEDIUM**

(30) Priority: 06.12.2023 CN 202311671959
(71) Applicant: Vivo Mobile Communication Co., Ltd., Dongguan, Guangdong 523863 (CN)
(72) Inventor: SONG, Erhao, Dongguan, Guangdong 523863 (CN)
(74) Representative: Shieldmark
(86) International application number: PCT/CN2024/137204
(87) International publication number: WO 2025/119293

(57) **Abstract**

This application belongs to the technical field of communications, and in particular, relates to a subsequent handover method and apparatus, a terminal, and a readable storage medium. The method includes: executing a first operation by a terminal after handover to a first cell. The first operation includes: determining, by the terminal, to skip executing handover-related processing for a first candidate cell in response to that a key derivation parameter for next handover is absent; or, executing, by the terminal, handover-related processing for the first candidate cell in response to that a key derivation parameter for the next handover is present; or, performing, by the terminal after an RLF or HOF occurs, cell selection and executing recovery-related processing according to a selected cell. The ID associated with the first candidate cell is different from the ID associated with the first cell, and the ID is used for indicating whether key update or PDCP re-establishment needs to be executed in the case of handover or recovery to a target cell.

## Description

### CROSS-REFERENCE TO RELATED APPLICATIONS

This application claims priority to Chinese Patent Application No. 202311671959.3, filed with the China National Intellectual Property Administration on December 6, 2023 and entitled "SUBSEQUENT HANDOVER METHOD AND APPARATUS, TERMINAL, AND READABLE STORAGE MEDIUM", which is incorporated herein by reference in its entirety.

### TECHNICAL FIELD

This application belongs to the technical field of communications, and in particular, relates to a subsequent handover method and apparatus, a terminal, and a readable storage medium.

### BACKGROUND

For subsequent conditional handover (Conditional Handover, CHO) or subsequent conditional L1/L2-triggered mobility (conditional L1/L2-triggered mobility, conditional LTM), after handover is completed, a candidate cell configuration may not be released, and a network needs to reconfigure a key derivation parameter to support next handover after previous handover is completed. However, before the key derivation parameter is reconfigured, if the terminal initiates CHO or conditional LTM, the terminal may not communicate normally with a target cell after receiving an RRC reconfiguration message.

### SUMMARY

Embodiments of this application provide a subsequent handover method and apparatus, a terminal, and a readable storage medium, to solve the problem that before a key derivation parameter is reconfigured, if a terminal initiates CHO or conditional LTM, the terminal may not communicate normally with a target cell after receiving an RRC reconfiguration message.

In a first aspect, a subsequent handover method is provided. The method includes:
executing a first operation by a terminal after handover to a first cell.

The first operation includes:
determining, by the terminal, to skip executing handover-related processing for a first candidate cell in response to that a key derivation parameter for next handover is absent; or,
executing, by the terminal, handover-related processing for the first candidate cell in response to that a key derivation parameter for the next handover is present; or,
performing, by the terminal after an RLF or HOF occurs, cell selection and executing recovery-related processing according to a selected cell.

The ID associated with the first candidate cell is different from the ID associated with the first cell, and the ID is used for indicating whether key update or PDCP re-establishment needs to be executed in the case of handover or recovery to a target cell.

In a second aspect, a subsequent handover apparatus is provided. The apparatus includes:
an execution module, configured to execute a first operation by a terminal after handover to a first cell.

The first operation includes:
determining, by the terminal, to skip executing handover-related processing for a first candidate cell in response to that a key derivation parameter for next handover is absent; or,
executing, by the terminal, handover-related processing for the first candidate cell in response to that a key derivation parameter for the next handover is present; or,
performing, by the terminal after an RLF or HOF occurs, cell selection and executing recovery-related processing according to a selected cell.

The ID associated with the first candidate cell is different from the ID associated with the first cell, and the ID is used for indicating whether key update or PDCP re-establishment needs to be executed in the case of handover or recovery to a target cell.

In a third aspect, a terminal is provided. The terminal includes a processor and a memory. The memory stores a program or an instruction runnable on the processor, and the program or instruction, when executed by the processor, implements the steps of the method according to the first aspect.

In a fourth aspect, a readable storage medium is provided. The readable storage medium stores a program or an instruction, and the program or the instruction, when executed by a processor, implements the steps of the method according to the first aspect.

In a fifth aspect, a wireless communication system is provided, which includes a terminal and a network side device. The terminal may be configured to execute the steps of the method according to the first aspect.

In a sixth aspect, a chip is provided. The chip includes a processor and a communication interface. The communication interface is coupled with the processor, and the processor is configured to run a program or an instruction to implement the method according to the first aspect.

In a seventh aspect, a computer program/program product is provided. The computer program/program product is stored in a storage medium, and the program/program product is executed by at least one processor to implement the method according to the first aspect.

In the embodiments of this application, in response to that a key derivation parameter for the next handover is absent, the terminal determines to skip executing inter-CU handover, so as to avoid the problem of incapability of communicating normally with the target cell after the handover; in response to that a key derivation parameter for the next handover is present, the terminal determines to execute the inter-CU handover, so as to ensure the normal communication with the target cell; and after the RLF or HOF occurs, the terminal determines to execute recovery-related processing according to the condition of a selected cell, so as to ensure to correctly execute the link recovery.

### BRIEF DESCRIPTION OF THE DRAWINGS

FIG. 1a is a block diagram of a wireless communication system applicable to an embodiment of this application;
FIG. 1b is an architecture diagram of a CU-DU;
FIG. 1c is a schematic flowchart of LTM handover;
FIG. 1d is a schematic flowchart of CHO handover;
FIG. 2 is a schematic flowchart of a subsequent handover method provided by an embodiment of this application;
FIG. 3 is a schematic structural diagram of a subsequent handover apparatus provided by an embodiment of this application;
FIG. 4 is a schematic structural diagram of a communication device provided by an embodiment of this application; and
FIG. 5 is a schematic structural diagram of a terminal provided by an embodiment of this application.

### DETAILED DESCRIPTION

The technical solutions in embodiments of this application will be clearly described below with reference to the accompanying drawings in the embodiments of this application. Apparently, the described embodiments are merely some rather than all of the embodiments of this application. All other embodiments obtained by a person of ordinary skill in the art based on the embodiments of this application shall fall within the protection scope of this application.

The terms such as "first" and "second" in this application are used for distinguishing similar objects and not necessarily used for describing the particular order or sequence. It should be understood that such used terms may be interchangeable under appropriate circumstances, so that the embodiment of this application may be implemented in a sequence other than those illustrated or described in the figures or by texts. In addition, the objects distinguished by "first" or "second" are generally objects of one type with the unlimited object quantity. For example, a first object may indicate one or more first objects. In addition, "or" in this application indicates at least one of connected objects. For example, "A or B" covers three solutions, i.e., Solution 1: including A but excluding B; Solution 2: including B but excluding A; and Solution 3: including both A and B. The character "/" generally indicates an "or" relationship between the associated objects.

The term "indication" in this application may be a direct indication (or an explicit indication), or an indirect indication (or an implicit indication). The direct indication may be understood as that a sender explicitly notifies a receiver of contents such as specific information, an operation needing to be performed, or a request result in the sent indication. The indirect indication may be understood as that the receiver determines corresponding information according to an indication sent by the sender, or performs determination and determines an operation needing to be performed or a request result according to a determination result.

It should be noted that the technology described in the embodiments of this application is not limited to a long term evolution (Long Term Evolution, LTE)/LTE-advanced (LTE-Advanced, LTE-A) system, and may further be applied to other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, FDMA), single-carrier frequency-division multiple access (Single-carrier Frequency-Division Multiple Access, SC-FDMA), or other systems. Terms "system" and "network" in the embodiments of this application are usually used interchangeably, and the described technologies may be applied to the system and radio technologies mentioned above, or may also be applied to other systems and radio technologies. The following descriptions describe a new radio (New Radio, NR) system for exemplary purposes, and NR terms are used in most of the following descriptions. However, these technologies may also be applied to a system other than the NR system, for example, a 6^{th} generation (6^{th} Generation, 6G) communication system.

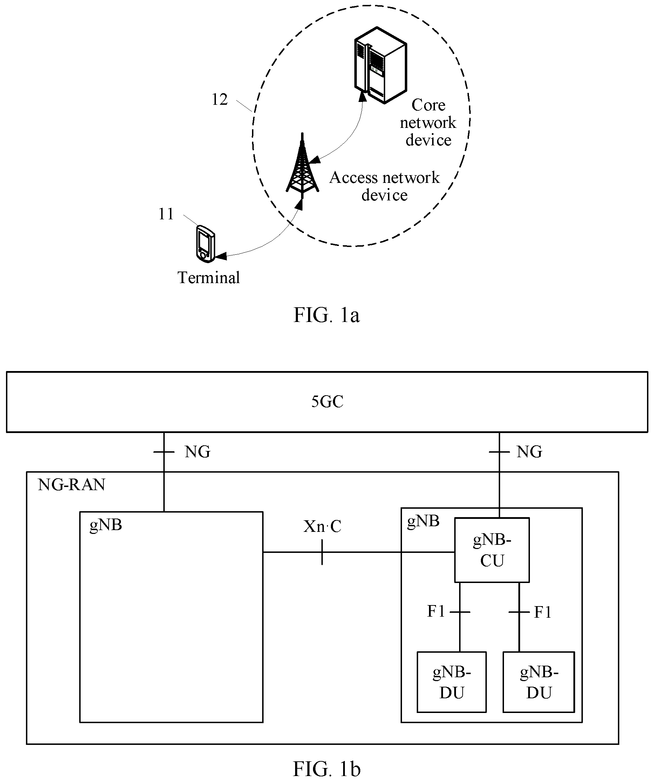

FIG. 1a shows a block diagram of a wireless communication system applicable to an embodiment of this application. The wireless communication system includes a terminal 11 and a network side device 12. The terminal 11 may be a terminal side device such as a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile Internet device (Mobile Internet Device, MID), an augmented reality (Augmented Reality, AR) device, a virtual reality (Virtual Reality, VR) device, a robot, a wearable device (Wearable Device), a flight vehicle (flight vehicle), vehicle user equipment (Vehicle User Equipment, VUE), ship user equipment, pedestrian user equipment (Pedestrian User Equipment, PUE), a smart household device (a household device having a wireless communication function, such as a refrigerator, a television, a washing machine, or furniture), a game machine, a personal computer (Personal Computer, PC), a teller machine, or a self-help machine. The wearable device includes: a smartwatch, a smart bracelet, a smart earphone, smart glasses, smart jewelry (a smart bangle, a smart bracelet, a smart ring, a smart necklace, a smart anklet, a smart leglet, and the like), a smart wristband, smart clothing, and the like. The vehicle user equipment may also be referred to as an in-vehicle terminal, an in-vehicle controller, an in-vehicle module, an in-vehicle component, an in-vehicle chip, an in-vehicle unit, or the like. It should be noted that in the embodiments of this application, a specific type of the terminal 11 is not limited. The network side device 12 may include an access network device or a core network device. The access network device may also be referred to as a radio access network (Radio Access Network, RAN) device, a radio access network function, or a radio access network unit. The access network device may include a base station, a wireless local area network (Wireless Local Area Network, WLAN) access point (Access Point, AP), a wireless fidelity (Wireless Fidelity, WiFi) node, or the like. The base station may be referred to as a Node B (Node B, NB), an evolved node B (Evolved Node B, eNB), the next generation node B (the next generation Node B, gNB), a new radio node B (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home node B (home Node B, HNB), a home evolved node B (home evolved Node B), a transmission reception point (Transmission Reception Point, TRP), or some other suitable term in the art. As long as the same technical effect may be achieved, the base station is not limited to a specific technical word. It should be noted that in the embodiments of this application, only the base station in the NR system is taken as an example for description, and a specific type of the base station is not limited.

The core network device may include, but is not limited to, at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that the core network device in the NR system is used only as an example for description in the embodiments of this application, and a specific type of the core network device is not limited.

To better understand the technical solutions of this application, the following content is first described.

### Centralized unit (Centralized Unit, CU)-Distributed Unit (Distributed Unit, DU) architecture

The NR access network splits a gNB into a gNB-CU and a gNB-DU, and connects the gNB-CU and the gNB-DU through an F1 interface. An architecture of the CU-DU is as shown in FIG. 1b.

One gNB includes only one CU, includes one or more DUs, and one DU includes one or more cells (cell).

The CU includes protocol stacks of packet data convergence protocol (Packet Data Convergence Protocol, PDCP) and above. The DU includes protocol stacks below the PDCP layer (radio link control (Radio Link Control, RLC), media access control (Media Access Control, MAC), physical layer (Physical, PHY)).

On a control plane, the CU includes a radio resource control (Radio Resource Control, RRC) and a control-plane PDCP (PDCP-C).

On a user plane, the CU includes a service data adaptation protocol (Service Data Adaptation Protocol, SDAP) and a user-plane PDCP (PDCP-U).

### LTM

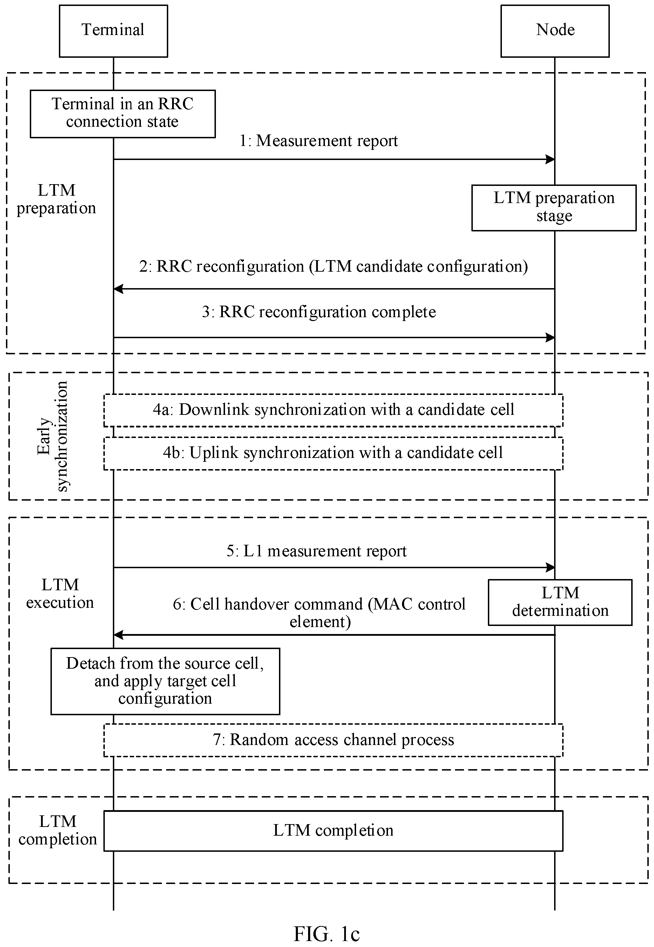

To reduce handover delay, LTM (L1/L2-triggered mobility) is introduced, that is, the network preconfigures a plurality of LTM candidate cells, and according to a layer 1 measurement result reported by the terminal, the DU instructs the terminal to perform handover to a suitable candidate cell by using L1/L2 signaling. The LTM only supports cell handover in a same CU. A specific flow process is as shown in FIG. 1c.

Subsequent LTM: UE performs subsequent handover among a plurality of configured candidate cells without the need of reconfiguration of a candidate cell by the network.

### CHO

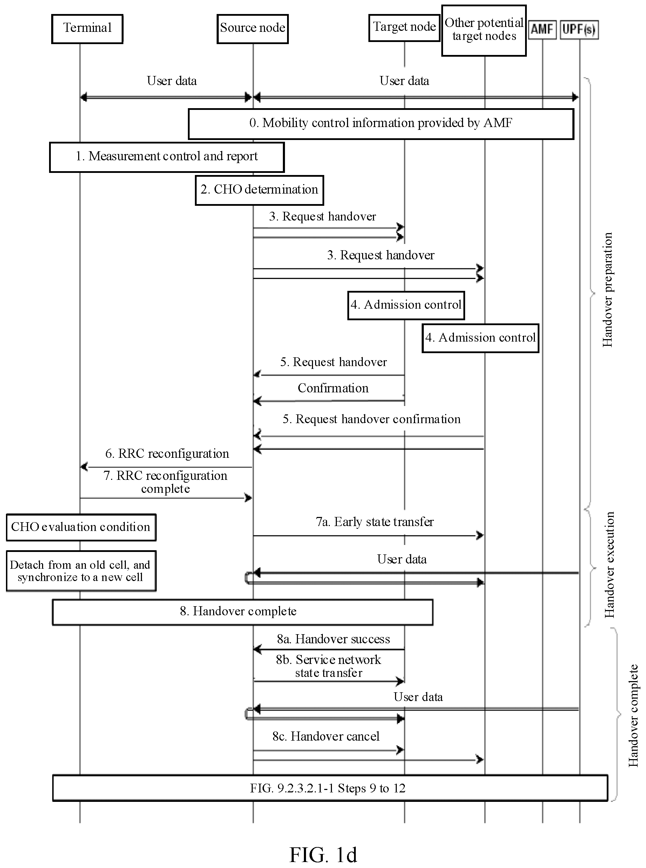

To avoid handover failure caused by failure of the terminal in receiving a handover-command-related message of a source node after a channel condition of a source cell worsens, a conditional handover process is introduced. A specific process is as shown in FIG. 1d.

Main steps of the conditional handover process are as follows:
1. In a measurement process, the UE reports a measurement report.
2. The source node determines to use the CHO.
3. The source node sends handover request information to one or more potential target nodes.
4. The target node may execute admission control (admission control).
5. The target node feeds back handover confirmation information to the source node.
6. The source node sends RRC reconfiguration (RRCReconfiguration) information including conditional handover to the UE.
7. The UE sends an RRC reconfiguration complete (RRCReconfigurationComplete) message to the source node.
8. The UE evaluates whether the candidate cell meets a condition or not, and selects a target cell for handover in a case that the candidate cell meets the condition.

The UE initiates a random access process in the selected target cell.

The UE sends the RRCReconfigurationComplete information to the target node.

After successfully completing the handover process, the UE releases the stored conditional handover configuration.

8a. The target node sends a handover success message to the source node.

8b. The source node sends a service network (Service Network, SN) state transfer message to the target node.

8c. The source node sends a handover cancel message to other candidate nodes.

Currently supported CHO handover triggering conditions are events A3 and A5. In a case that two handover triggering conditions are configured at the same time, only when the two conditions are met at the same time, the CHO or the conditional secondary cell PSCell addition/Change (Conditional PSCell Addition/Change, CPAC) may be triggered.

| Event | Definition | Entry and exit condition |
|---|---|---|
| Event A1 | The serving cell quality is higher than a threshold *Thresh* | Entry condition: *Ms-Hys>Thresh* |
| | | Exit condition: *Ms+Hys<Thresh* |
| Event A2 | The serving cell quality is lower than a threshold *Thresh* | Entry condition: *Ms+Hys<Thresh* |
| | | Exit condition: *Ms-Hys>Thresh* |
| Event A3 | The neighbor cell quality is an offset value higher than that of the serving cell | Entry condition: *Mn+Ofn+Ocn-Hys>Mp+Ofp+Ocp+Off* |
| | | Exit condition: *Mn+Ofn+Ocn+Hys<Mp+Ofp+Ocp+Off* |
| Event A4 | The neighbor cell quality is higher than a threshold | Entry condition: *Mn+Ofn+Ocn-Hys>Thresh* |
| | | Exit condition: *Mn+Ofn+Ocn+Hys<Thresh* |
| Event A5 | The serving cell quality is lower than a threshold 1 *Thresh1*; and the neighbor cell quality is higher than a threshold 2 *Thresh2* | Entry condition: *Mp+Hys<Thresh1* |
| | | *Mn+Ofn+Ocn-Hys>Thresh2* |
| | | Exit condition: *Mp-Hys>Thresh1* |
| | | *Mn+Ofn+Ocn+Hys<Thresh2* |
| Event A6 | The neighbor cell quality is higher than that of a secondary cell (SCell) | Entry condition: *Mn+Ocn-Hys>Ms+Ocs+Off* |
| | | Exit condition: *Mn+Ocn+Hys<Ms+Ocs+Off* |
| Event B1 | The Inter-RAT neighbor cell quality is higher than a threshold *Thresh* | Entry condition: *Mn+Ofn+Ocn-Hys>Thresh* |
| | | Exit condition: *Mn+Ofn+Ocn+Hys<Thresh* |
| Event B2 | The primary cell (PCel) quality is lower than a threshold 1 *Thresh1*; and the inter-radio access technology (Inter-Radio Access Technology, Inter-RAT) neighbor cell quality is higher than a threshold 2 *Thresh2* | Entry condition: *Mp+Hys<Thresh1* |
| | | *Mn+Ofn+Ocn-Hys>Thresh2* |
| | | Exit condition: *Mp-Hys>Thresh1* |
| | | *Mn+Ofn+Ocn+Hys<Thresh2* |
| Event I1 | The interference quality is higher than a threshold *Thresh* | Entry condition: *Mi-Hys>Thresh* |
| | | Exit condition: *Mi+Hys<Thresh* |

By taking the event A3 as an example, the meanings of parameters of the entry condition and the exit condition are as follows:
Mn: a neighbor cell measurement result without considering any offset.
Ofn: specific offset of a neighbor cell measurement object.
Ocn: cell-level specific offset of a neighbor cell.
Mp: a primary serving cell (SpCell) measurement result without considering any offset.
Ofp: specific offset of an SpCell measurement object.
Ocp: cell-level specific offset of an SpCell.
Hys: a hysteresis parameter of an event.
Off: an offset parameter of an event.
Mi: a neighbor cell interference measurement result.

To avoid the ping-pong handover, a base station configures a time-to-trigger (timeToTrigger) parameter for each event in a condition trigger configuration (CondTriggerConfig). When the L3 filtering signal quality of one or more candidate cells within the timeToTrigger meets the entry condition of the event, the UE uses the cells meeting the condition as trigger cells, and selects one trigger cell from the trigger cells to execute condition reconfiguration.

### Subsequent CHO (Subsequent CHO)

For supporting subsequent CHO handover, in this case, candidate cell configuration may not be released after the handover, and a key of a candidate cell needs to be reconfigured after each handover, that is, a key derivation parameter needs to be provided for the UE.

### CHO based recovery (CHO based recovery)

After a radio link failure (Radio Link Failure, RLF) or handover failure (Handover Failure, HOF) occurs, the UE executes cell selection. In a case that a selected cell is a CHO candidate cell, and a network configuration attempt condition reconfiguration information unit (attemptCondReconfig IE) is true, the UE attempts to execute CHO once; and otherwise, the UE executes re-establishment.

An LTM based recovery (LTM based recovery) method similar to the CHO based recovery is also supported for the LTM or the conditional LTM.

### Conditional LTM

The conditional LTM differs from the LTM in that the UE evaluates an event (similar to a condition of the CHO, the condition of the conditional LTM is defined based on the L1 measurement) preconfigured by the network to determine whether a handover condition is met or not, so that the UE executes handover by itself without the need of indicating a handover command by the DU.

### Subsequent conditional LTM

The Conditional LTM may also support subsequent handover, that is, the LTM candidate cell configuration is not released, and the key derivation parameter is reconfigured after each handover to support next handover.

### Key change of Xn handover

Xn handover is to implement inter-CU handover by using an Xn interface between a source gNB/ng-eNB and a target gNB/ng-eNB. A key derivation process of the handover process thereof is as follows:

### Network side:

a) In a case that an unused {NH, NCC} pair exists in the source gNB/ng-eNB, vertical key derivation is executed; and otherwise, horizontal key derivation is executed. NH (Next Hop) is derived from a key of an AMF KAMF, and NCC is a next hop chaining counter (Next Hop Chaining Counter). In a case that the vertical key derivation is executed, the source gNB/ng-eNB obtains K_{NG-RAN}* through calculation according to the NH by using a physical cell identifier (Physical Cell Identifier, PCI) of the target cell and a frequency point as the input. In a case that the horizontal key derivation is executed, the source gNB/ng-eNB obtains K_{NG-RAN}* through calculation according to the currently used key K_{gNB} by using the PCI of the target cell and the frequency point as the input.
b) The source gNB/ng-eNB sends the {K_{NG-RAN}*, NCC} pair to the target gNB/ng-eNB. The target gNB/ng-eNB uses the K_{NG-RAN}* as the K_{gNB} when the UE is handed over to the target cell. The target gNB/ng-eNB associates the NCC with the target K_{gNB}, and transmits an HO Command message including the received NCC to the source gNB/ng-eNB, and the source gNB/ng-eNB sends the message to the UE.
c) After the handover is completed, the target gNB/ng-eNB sends an NGAP PATH SWITCH REQUEST message to the AMF. After receiving the message, the AMF adds 1 to the locally stored NCC, and derivates a new NH according to the K_{AMF}. The AMF sends the new {NH, NCC} to the target gNB/ng-eNB through NGAP PATH SWITCH REQUEST ACKNOWLEDGE for subsequent handover, and deletes other {NH, NCC} pairs that have been saved.

### UE side:

When the UE side executes handover and applies the RRC configuration of the target cell:
- in a case that the NCC value received by the UE in the handover command is the same as NCC associated with the currently used K_{gNB}/K_{eNB}, the UE performs horizontal derivation according to the current K_{gNB}/K_{eNB}, the target PCI and the frequent point to obtain the K_{NG-RAN}*; and
- in a case that the NCC value received by the UE in the handover command is different from NCC associated with the currently used K_{gNB}/K_{eNB}, the UE first synchronizes the NCC and the NH until the NCC is matched with the NCC indicated by the handover command. Then, the UE performs vertical derivation according to the synchronized NH, the target PCI, and the frequency point to obtain the K_{NG-RAN}*.

The UE uses the K_{NG-RAN}* as the K_{gNB}/K_{eNB} used for communication with the target gNB/ng-eNB.

For the LTM, two types of handover scenarios: intra-DU (the same distributed unit) and intra-CU, and inter-DU (the same centralized unit but different distributed units) are supported. The LTM of inter-CU (different centralized units) may be supported in the future. At the same time, conditional LTM may also be supported. That is, the UE performs measurement based on a handover event preconfigured by the network, and then performs handover to a candidate cell after the condition is met. For the CHO, subsequent CHO may also be extensively supported.

The inter-CU handover involves with the PDCP entity change at the network side. Therefore, key change is required. Before the next handover, a key of the target cell or the candidate cell needs to be reconfigured, and a new NCC needs to be provided for the UE. For subsequent LTM or subsequent CHO handover, the UE may retain the candidate cell configuration for subsequent handover. Therefore, before previous handover is completed and the NCC for the next handover is not received, the UE may initiate handover or initiate recovery after RLF/HOF.

It may be known from the above that for the subsequent CHO or subsequent conditional LTM, the candidate cell configuration may not be released after the handover is completed, and the network needs to reconfigure the NCC to support the next handover after the previous handover is completed. However, before receiving the NCC reconfiguration, in a case that the UE initiates CHO or conditional LTM (normal handover or recovery-triggered handover), how to apply a key and how to avoid incorrect handover are to be resolved at this moment.

The subsequent handover method provided by the embodiments of this application will be illustrated in detail by using some embodiments and application scenarios thereof with reference to the accompanying drawings.

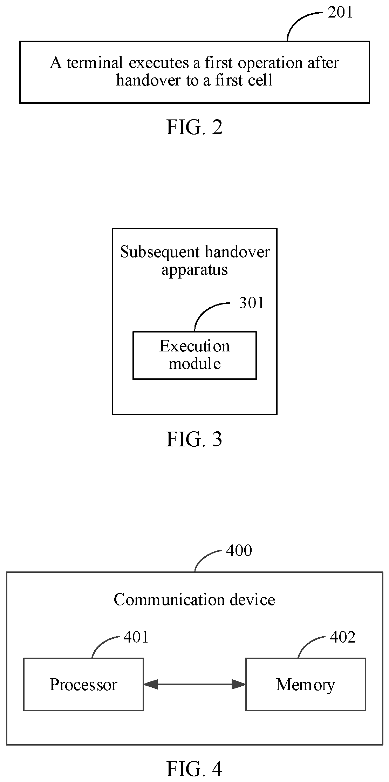

Referring to FIG. 2, an embodiment of this application provides a subsequent handover method. An execution body of the method is a terminal, and the method includes:
Step 201: The terminal executes a first operation after handover to a first cell.

The first operation includes:
(1) The terminal determines to skip executing handover-related processing for a first candidate cell in response to that a key derivation parameter for next handover is absent. The absence of the key derivation parameter for the next handover refers to that the terminal has not received the key derivation parameter reconfigured by the network side. That is, before the key derivation parameter is reconfigured, the terminal does not execute a processing operation related to handover. Therefore, for an Inter-CU handover scenario, incorrect key use may be avoided.
(2) The terminal executes handover-related processing for the first candidate cell in response to that a key derivation parameter for the next handover is present. The presence of the key derivation parameter for the next handover refers to that the terminal has received the key derivation parameter reconfigured by the network side. That is, after the key derivation parameter is reconfigured, the terminal executes a processing operation related to handover, so as to ensure to use the correct key for next handover processing. It should be noted that the terminal may receive the key derivation parameter reconfigured by the network side before or after the handover to the first cell. An execution order of the step of receiving, by the terminal, the key derivation parameter reconfigured by the network side and the step of performing handover to the first cell by the terminal is not specifically defined in the embodiments of this application.
(3) The terminal performs cell selection and executes recovery-related processing according to a selected cell after an RLF or HOF occurs. For failure recovery processing, the terminal executes corresponding processing based on a specific situation of the selected cell, so as to ensure to correctly execute a recovery processing operation.

The identifier (ID) associated with the first candidate cell is different from the ID associated with the first cell, and the ID is used for indicating whether key update or PDCP re-establishment needs to be executed in the case of handover or recovery to a target cell. The same ID indicates that key update or PDCP re-establishment does not need to be executed, and different identifiers indicate that the key is not changed and PDCP re-establishment is not needed.

Optionally, the key derivation parameter may be NCC.

Optionally, the key derivation parameter may further be a master key update indication (MasterKeyUpdate). The master key update indication includes at least one of the following: an indication of whether an AMF key (KAMF) changes or not, NCC, and NAS information nas-Container submitted to upper layers.

For clear description, in the following descriptions and illustrations of the solutions, a case in which the key derivation parameter is the NCC is used for description. Other types of key derivation parameter solutions are also applicable, and details are not described herein again.

In the embodiments of this application, in response to that a key derivation parameter for the next handover is absent, the terminal determines to skip executing inter-CU handover, so as to avoid the problem of incapability of communicating normally with the target cell after the handover; in response to that a key derivation parameter for the next handover is present, the terminal determines to execute the inter-CU handover, so as to ensure the normal communication with the target cell; and after the RLF or HOF occurs, the terminal determines to execute recovery-related processing according to the condition of a selected cell, so as to ensure to correctly execute the link recovery.

In a possible implementation, the operation that the terminal determines to skip executing handover-related processing for a first candidate cell in response to that a key derivation parameter for next handover is absent includes:
(1) The terminal stops handover condition evaluation on the first candidate cell in response to that a key derivation parameter for the next handover is absent;
   after the handover is completed, the terminal suspends condition evaluation on the first candidate cell before receiving the key derivation NCC for the next handover; and by stopping the condition evaluation on the first candidate cell, handover to the first candidate cell is prohibited.
(2) The terminal prohibits handover to the first candidate cell in response to that a key derivation parameter for the next handover is absent and the first candidate cell meets a handover execution condition.

After the handover is completed, the terminal does not allow the handover to the first candidate cell before receiving the key derivation NCC for the next handover even if the condition evaluation of the first candidate cell is met.

Through the specific processing operations of (1) and (2), the specific processing operation of the terminal before the key derivation parameter reconfiguration is clearly provided. Therefore, for an Inter-CU handover scenario, incorrect key use may be avoided.

In a possible implementation, the operation that the terminal executes handover-related processing for the first candidate cell in response to that a key derivation parameter for the next handover is present includes:
(1) The terminal starts handover condition evaluation on the first candidate cell in response to that a key derivation parameter for the next handover is present;
   the terminal restarts condition evaluation on the first candidate cell after receiving the key derivation NCC for the next handover; and by starting the condition evaluation on the first candidate cell, handover to the first candidate cell is allowed.

(2) The terminal performs handover to the first candidate cell in response to that a key derivation parameter for the next handover is present and the first candidate cell meets a handover execution condition.

The terminal allows the handover to the first candidate cell after the key derivation NCC for the next handover is received and the condition evaluation of the first candidate cell is met.

Through the specific processing operations of (1) and (2), the specific processing operation of the terminal after the key derivation parameter reconfiguration is clearly provided. Therefore, for an Inter-CU handover scenario, incorrect key use may be avoided.

In a possible implementation, the operation that the terminal performs cell selection and executes recovery-related processing according to a selected cell after an RLF or HOF occurs includes:
(1) After the RLF or HOF occurs, in response to that a key derivation parameter for the next handover is absent and the terminal selects the first candidate cell, the terminal executes an RRC connection re-establishment process, or, skips executing CHO based link recovery or LTM based link recovery by the terminal.

Before the terminal receives the key derivation NCC for the next handover, and after the RLF or HOF occurs, the terminal performs cell selection. In a case that the ID of the selected cell is different from the ID of a current source cell, that is, the ID of the first candidate cell is different from that of the first cell, the terminal executes RRC connection re-establishment process, or the terminal skips executing CHO based recovery or LTM based recovery.

(2) In a case that a network is configured with a first configuration and the RLF or HOF occurs, the terminal executes CHO based link recovery in response to that a key derivation parameter for the next handover is absent and a cell selected by the terminal belongs to a second candidate cell in a CHO candidate cell set.

The first configuration is used for indicating whether the terminal executes CHO based recovery processing or not after the RLF or HOF occurs. The first configuration may be recorded as attemptCondReconfig. Before the UE receives the key derivation NCC for the next handover, and in a case that the RLF or HOF occurs and the network configures CHO handover attempt (for example, attemptCondReconfig is indicated) after the RLF/HOF, the UE may only execute CHO based recovery on the second candidate cell. The second candidate cell is a cell with the associated ID being the same as the ID associated with the current source cell.

(3) In a case that the network is configured with a second configuration and the RLF or HOF occurs, the terminal executes LTM based link recovery in response to that a key derivation parameter for the next handover is absent and the cell selected by the terminal belongs to a second candidate cell in an LTM candidate cell set.

The second configuration is used for indicating whether the terminal executes LTM based recovery processing or not after the RLF or HOF occurs. The second configuration may be recorded as attemptLTM-Switch. Before the UE receives the key derivation NCC for the next handover, and in a case that the RLF or HOF occurs and the network configures LTM handover attempt (for example, attemptLTM-Switch is indicated) after the RLF/HOF, the UE may only execute LTM based recovery on the second candidate cell. The second candidate cell is a cell with the associated ID being the same as the ID associated with the current source cell.

(4) In a case that the network is configured with the first configuration and the RLF or HOF occurs, the terminal executes the CHO based link recovery in response to that a key derivation parameter for the next handover is present and the cell selected by the terminal belongs to the second candidate cell in the CHO candidate cell set.

Before the UE receives the key derivation NCC for the next handover, and in a case that the RLF or HOF occurs and the network configures CHO handover attempt (for example, attemptCondReconfig is indicated) after the RLF/HOF, the UE may execute CHO based recovery on a cell in the CHO candidate cell set.

(5) In a case that the network is configured with the second configuration and the RLF or HOF occurs, the terminal executes the LTM based link recovery in response to that a key derivation parameter for the next handover is present and the cell selected by the terminal belongs to the second candidate cell in the LTM candidate cell set.

Before the UE receives the key derivation NCC for the next handover, and in a case that the RLF or HOF occurs and the network configures LTM handover attempt (for example, attemptLTM-Switch is indicated) after the RLF/HOF, the UE may execute LTM based recovery on a cell in the LTM candidate cell set.

The ID associated with the second candidate cell is the same as the ID associated with the first cell.

The ID associated with a cell in the CHO/LTM candidate cell set may be the same as or different from the ID associated with the first cell.

Through the above (1) to (5), specific operations of executing recovery processing by the terminal based on the selected cell are clearly provided.

In a possible implementation, the method further includes:
(1) the terminal keeps a key unchanged and skips executing PDCP re-establishment in a case that the ID associated with the second cell is the same as the ID associated with the first cell; and
(2) the terminal derives a key based on the key derivation parameter and executes PDCP re-establishment in a case that the ID associated with the second cell is different from the ID associated with the first cell.

The second cell is a cell selected in a CHO based recovery processing process or an LTM based recovery processing process.

In the above process of executing recovery, in a case that the ID of a cell selected based on recovery is the same as the ID of the current source cell, that is, the ID associated with the second cell is the same as the ID associated with the first cell, the terminal keeps the key unchanged and skips executing PDCP re-establishment, so as to be applicable to a non-inter-CU handover scenario.

In the above process of executing recovery, in a case that the ID of the cell selected based on the recovery is different from the ID of the current source cell, that is, the ID associated with the second cell is different from the ID associated with the first cell, the terminal derives the key based on the key derivation parameter and executes PDCP re-establishment, so as to be applicable to an inter-CU handover scenario.

The technical solutions of this application will be described hereafter with reference to specific embodiments.

Embodiment 1: no NCC is available in a subsequent CHO/Conditional LTM process.
1. The UE receives at least one candidate cell configuration (which may be a CHO or LTM candidate cell) provided by the network, some candidate cells (i.e., inter-CU cells) in the candidate cell configuration are configured with or associated with an NCC; and each candidate cell is configured and associated with an ID, and the ID is used for indicating whether the UE needs to perform key update or PDCP re-establishment or not during handover to the candidate cell.
2. The UE performs handover to a candidate cell (which may be NW triggered L3 HO, CHO, LTM, or Conditional LTM) configured with or associated with an NCC, and the NCC is used for performing key derivation in the handover process.
3. After the handover is completed, the UE suspends the condition evaluation on a first candidate cell before receiving the key derivation NCC for next handover, or does not allow the handover to the first candidate cell even the condition evaluation is met. The first candidate cell is a cell with the associated ID being different from the ID associated with a current source cell.
4. After receiving the key derivation NCC for the next handover, the UE restarts the condition evaluation on the first candidate cell, or allows handover to the first candidate cell after the condition evaluation is met.

Embodiment 2: RLF/HOF occurs, and no NCC is available in a recovery process.

1 to 2 are the same as those in Embodiment 1.

3. After the handover is completed, and in a case that the RLF or HOF occurs before the UE receives the key derivation NCC for the next handover and the network configures CHO/LTM handover attempt (for example, attemptCondReconfig or attemptLTM-Switch is indicated) after the RLF/HOF, the UE may only execute CHO based recovery or LTM based recovery on a second candidate cell. The second candidate cell is a cell with the associated ID being the same as the ID associated with a current source cell.

4. After the UE receives the key derivation NCC (which may be indicated by using an RRC or LTM handover command) for the next handover, and in a case that the RLF/HOF occurs and the network configures CHO/LTM handover attempt after the RLF/HOF, the UE may select any one CHO candidate cell to execute CHO based recovery or any one LTM candidate cell to execute LTM based recovery. When the recovery is performed, in a case that the ID associated with the source cell is the same as that associated with the target cell, the UE key keeps unchanged, and PDCP re-establishment is not performed. In a case that the ID associated with the source cell is different from that associated with the target cell, the UE executes PDCP re-establishment based on the NCC derivation key in the recovery process.

According to the subsequent handover method provided in the embodiments of this application, an execution body may be a subsequent handover apparatus. In the embodiments of this application, the subsequent handover apparatus provided by the embodiments of this application is described by taking the subsequent handover apparatus executing the subsequent handover method as an example.

Referring to FIG. 3, an embodiment of this application provides a subsequent handover apparatus, and the subsequent handover apparatus may be applied to a terminal. The apparatus includes:
an execution module 301, configured to execute a first operation by a terminal after handover to a first cell.

The first operation includes:
the terminal determines to skip executing handover-related processing for a first candidate cell in response to that a key derivation parameter for next handover is absent; or,
the terminal executes handover-related processing for the first candidate cell in response to that a key derivation parameter for the next handover is present; or,
the terminal performs cell selection and executes recovery-related processing according to a selected cell after an RLF or HOF occurs.

The ID associated with the first candidate cell is different from the ID associated with the first cell, and the ID is used for indicating whether key update or PDCP re-establishment needs to be executed in the case of handover or recovery to a target cell.

Optionally, the execution module is specifically configured to:
stop, by the terminal, handover condition evaluation on the first candidate cell in response to that a key derivation parameter for the next handover is absent; or,
prohibit, by the terminal, handover to the first candidate cell in response to that a key derivation parameter for the next handover is absent and the first candidate cell meets a handover execution condition.

Optionally, the execution module is specifically configured to:
start, by the terminal, handover condition evaluation on the first candidate cell in response to that a key derivation parameter for the next handover is present; or,
perform, by the terminal, handover to the first candidate cell in response to that a key derivation parameter for the next handover is present and the first candidate cell meets a handover execution condition.

Optionally, the execution module is specifically configured to:
after the RLF or HOF occurs, in response to that a key derivation parameter for the next handover is absent and the terminal selects the first candidate cell, execute, by the terminal, a radio resource control RRC connection re-establishment process, or, skip executing, by the terminal, conditional handover CHO based link recovery or L1/L2-triggered mobility LTM based link recovery; or,
in a case that a network is configured with a first configuration and the RLF or HOF occurs, execute, by the terminal, CHO based link recovery in response to that a key derivation parameter for the next handover is absent and a cell selected by the terminal belongs to a second candidate cell in a CHO candidate cell set; or,
in a case that the network is configured with a second configuration and the RLF or HOF occurs, execute, by the terminal, LTM based link recovery in response to that a key derivation parameter for the next handover is absent and the cell selected by the terminal belongs to a second candidate cell in an LTM candidate cell set;
in a case that the network is configured with the first configuration and the RLF or HOF occurs, execute, by the terminal, the CHO based link recovery in response to that a key derivation parameter for the next handover is present and the cell selected by the terminal belongs to the second candidate cell in the CHO candidate cell set; or,
in a case that the network is configured with the second configuration and the RLF or HOF occurs, execute, by the terminal, the LTM based link recovery in response to that a key derivation parameter for the next handover is present and the cell selected by the terminal belongs to the second candidate cell in the LTM candidate cell set.

The ID associated with the second candidate cell is the same as the ID associated with the first cell, the first configuration is used for indicating whether to execute the CHO based recovery processing after the RLF or HOF occurs, and the second configuration is used for indicating whether to execute the LTM based recovery processing after the RLF or HOF occurs.

Optionally, the apparatus further includes:
a processing module, configured to:
keep a key unchanged by the terminal and skip executing PDCP re-establishment in a case that the ID associated with the second cell is the same as the ID associated with the first cell; or,
derive a key by the terminal based on the key derivation parameter and execute PDCP re-establishment in a case that the ID associated with the second cell is different from the ID associated with the first cell.

The second cell is a cell selected in a CHO based recovery processing process or an LTM based recovery processing process.

The subsequent handover apparatus in the embodiments of this application may be an electronic device, for example, an electronic device having an operating system, or may also be a component, for example, an integrated circuit or a chip, in an electronic device. The electronic device may be a terminal, or may be another device other than the terminal. Exemplarily, the terminal may include, but is not limited to, the type of the terminal 11 listed above, the another device may be a server, a network attached storage (Network Attached Storage, DNS) and the like, and it is not specifically limited in the embodiments of this application.

The handover apparatus provided in the embodiments of this application may implement processes implemented in the method embodiments of FIG. 2 and achieve the same technical effects. To avoid repetition, details are not described herein again.

As shown in FIG. 4, an embodiment of this application further provides a communication device 400, which includes a processor 401 and a memory 402. The memory 402 stores a program or an instruction runnable on the processor 401. For example, in a case that the communication device 400 is a terminal, the program or the instruction, when executed by the processor 401, implements steps of the above method embodiments, and may achieve the same technical effects. In a case that the communication device 400 is a network side device, the program or the instruction, when executed by the processor 401, implements steps in the above method embodiments, and may achieve the same technical effects. To avoid repetition, details are not described herein again.

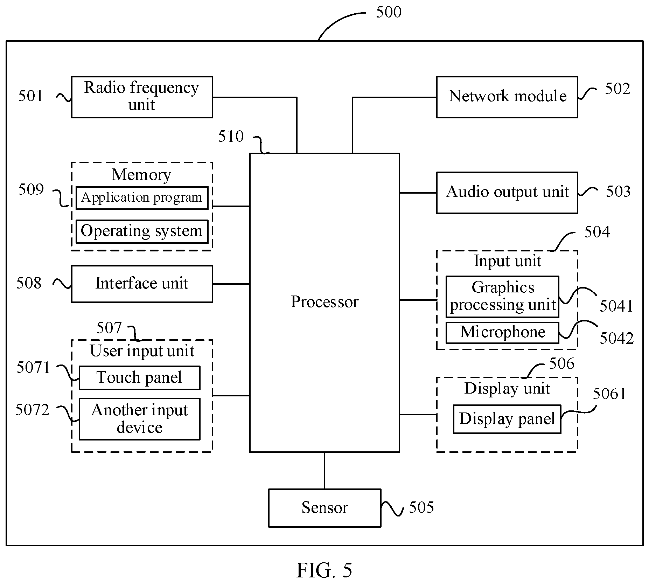

An embodiment of this application further provides a terminal, which includes a processor and a communication interface. The communication interface is coupled to the processor, and the processor is configured to run a program or an instruction to implement the steps in the method embodiments. The terminal embodiment corresponds to the above terminal side method embodiments. Implementation processes and implementations of the above method embodiments are applicable to the terminal embodiment, and may achieve the same technical effects. Specifically, FIG. 5 is a schematic structural diagram of hardware of a terminal provided by an embodiment of this application.

The terminal 500 includes, but is not limited to, at least some components in a radio frequency unit 501, a network module 502, an audio output unit 503, an input unit 504, a sensor 505, a display unit 506, a user input unit 507, an interface unit 508, a memory 509, a processor 510, and the like.

A person skilled in the art may understand that the terminal 500 may further include a power supply (such as a battery) for supplying electricity to each component. The power supply may be logically connected to the processor 510 through a power management system, so that functions such as charging management, discharging management, and power consumption management may be realized through the power management system. The terminal structure shown in FIG. 5 does not constitute a limitation to the terminal. The terminal may include more or fewer components than those shown in the figure, or some components may be combined, or a different component deployment may be used, and details are not described herein again.

It should be understood that in the embodiments of this application, the input unit 504 may include a graphics processing unit (Graphics Processing Unit, GPU) 5041 and a microphone 5042. The graphics processing unit 5041 processes image data of a static picture or a video obtained by an image capture apparatus (such as a camera) in a video capture mode or an image capture mode. The display unit 506 may include a display panel 5061. The display panel 5061 may be configured by using a liquid crystal display, an organic light-emitting diode, or the like. The user input unit 507 includes at least one of a touch panel 5071 and another input device 5072. The touch panel 5071 is also referred to as a touch screen. The touch panel 5071 may include two parts: a touch detection apparatus and a touch controller. The another input device 5072 may include, but is not limited to, a physical keyboard, a functional key (such as a volume control key or an on/off key), a track ball, a mouse, and a joystick. Details are not described herein again.

In the embodiments of this application, after receiving downlink data from a network side device, the radio frequency unit 501 may transmit the data to the processor 510 for processing. In addition, the radio frequency unit 501 may transmit uplink data to the network side device. Generally, the radio frequency unit 501 includes, but is not limited to, an antenna, an amplifier, a transceiver, a coupler, a low-noise amplifier, a duplexer, and the like.

The memory 509 may be configured to store a software program or instruction and various data. The memory 509 may mainly include a first storage area storing programs or instructions and a second storage area storing data. The first storage area may store an operating system, an application program or instruction required by at least one function (such as an audio playing function and an image playing function), and the like. In addition, the memory 509 may include a volatile memory or a non-volatile memory. The non-volatile memory may be a read-only memory (Read-Only Memory, ROM), a programmable ROM (Programmable ROM, PROM), an erasable PROM (Erasable PROM, EPROM), an electrically EPROM (Electrically EPROM, EEPROM), or a flash memory. The volatile memory may be a random access memory (Random Access Memory, RAM), a static RAM (Static RAM, SRAM), a dynamic RAM (Dynamic RAM, DRAM), a synchronous DRAM (Synchronous DRAM, SDRAM), a double data rate SDRAM (Double Data Rate SDRAM, DDRSDRAM), an enhanced SDRAM (Enhanced SDRAM, ESDRAM), a synch link DRAM (Synch link DRAM, SLDRAM), or a direct Rambus RAM (Direct Rambus RAM, DRRAM). The memory 509 in the embodiments of this application includes but is not limited to these memories and any other memories of a suitable type.

The processor 510 may include one or more processing units. Optionally, the processor 510 may integrate an application processor and a modem processor. The application processor mainly processes operations involving with an operating system, a user interface, an application program, and the like, and the modem processor mainly processes wireless communication signals, and is, for example, a baseband processor. It may be understood that the above modem processor may not be integrated into the processor 510.

The processor 510 is configured to execute a first operation by a terminal after handover to a first cell.

The first operation includes:
the terminal determines to skip executing handover-related processing for a first candidate cell in response to that a key derivation parameter for next handover is absent; or,
the terminal executes handover-related processing for the first candidate cell in response to that a key derivation parameter for the next handover is present; or,
the terminal performs cell selection and executes recovery-related processing according to a selected cell after an RLF or HOF occurs.

The ID associated with the first candidate cell is different from the ID associated with the first cell, and the ID is used for indicating whether key update or PDCP re-establishment needs to be executed in the case of handover or recovery to a target cell.

Optionally, the processor 510 is specifically configured to:
stop, by the terminal, handover condition evaluation on the first candidate cell in response to that a key derivation parameter for the next handover is absent; or,
prohibit, by the terminal, handover to the first candidate cell in response to that a key derivation parameter for the next handover is absent and the first candidate cell meets a handover execution condition.

Optionally, the processor 510 is specifically configured to:
start, by the terminal, handover condition evaluation on the first candidate cell in response to that a key derivation parameter for the next handover is present; or,
perform, by the terminal, handover to the first candidate cell in response to that a key derivation parameter for the next handover is present and the first candidate cell meets a handover execution condition.

Optionally, the processor 510 is specifically configured to:
after the RLF or HOF occurs, in response to that a key derivation parameter for the next handover is absent and the terminal selects the first candidate cell, execute, by the terminal, a radio resource control RRC connection re-establishment process, or, skip executing, by the terminal, conditional handover CHO based link recovery or L1/L2-triggered mobility LTM based link recovery; or,
in a case that a network is configured with a first configuration and the RLF or HOF occurs, execute, by the terminal, CHO based link recovery in response to that a key derivation parameter for the next handover is absent and a cell selected by the terminal belongs to a second candidate cell in a CHO candidate cell set; or,
in a case that the network is configured with a second configuration and the RLF or HOF occurs, execute, by the terminal, LTM based link recovery in response to that a key derivation parameter for the next handover is absent and the cell selected by the terminal belongs to a second candidate cell in an LTM candidate cell set;
in a case that the network is configured with the first configuration and the RLF or HOF occurs, execute, by the terminal, the CHO based link recovery in response to that a key derivation parameter for the next handover is present and the cell selected by the terminal belongs to the second candidate cell in the CHO candidate cell set; or,
in a case that the network is configured with the second configuration and the RLF or HOF occurs, execute, by the terminal, the LTM based link recovery in response to that a key derivation parameter for the next handover is present and the cell selected by the terminal belongs to the second candidate cell in the LTM candidate cell set.

The ID associated with the second candidate cell is the same as the ID associated with the first cell, the first configuration is used for indicating whether to execute the CHO based recovery processing after the RLF or HOF occurs, and the second configuration is used for indicating whether to execute the LTM based recovery processing after the RLF or HOF occurs.

Optionally, the processor 510 is configured to:
keep a key unchanged by the terminal and skip executing PDCP re-establishment in a case that the ID associated with the second cell is the same as the ID associated with the first cell; or,
derive a key by the terminal based on the key derivation parameter and execute PDCP re-establishment in a case that the ID associated with the second cell is different from the ID associated with the first cell.

The second cell is a cell selected in a CHO based recovery processing process or an LTM based recovery processing process.

It may be understood that for implementation processes of each implementation mentioned in this embodiment, related descriptions in the method embodiments may be taken as reference, and the same or corresponding technical effects may be achieved. To avoid repetition, details are not described herein again.

An embodiment of this application further provides a readable storage medium. The readable storage medium stores a program or an instruction. The program or the instruction, when executed by a processor, implements the processes of the above method embodiments, and may achieve the same technical effects. To avoid repetition, details are not described herein again.

The processor is the processor in the terminal in the above embodiments. The readable storage medium includes a computer readable storage medium, such as a computer read-only memory ROM, a random access memory RAM, a magnetic disk, or an optical disc. In some examples, the readable storage medium may be a non-transient readable storage medium.

An embodiment of this application further provides a chip. The chip includes a processor and a communication interface. The communication interface is coupled with the processor. The processor is configured to run a program or an instruction to implement processes of the above method embodiments, and achieves same technical effects. To avoid repetition, details are not described herein again.

It should be understood that the chip mentioned in the embodiments of this application may also be referred to as a system-level chip, a system chip, a chip system, a system on chip, and the like.

An embodiment of this application further provides a computer program/program product. The computer program/program product is stored in a storage medium. The computer program/program product is executed by at least one processor to implement processes of the above method embodiments, and may achieve the same technical effects. To avoid repetition, details are not described herein again.

An embodiment of this application further provides a wireless communication system, which includes a terminal and a network side device. The terminal may be configured to execute the steps of the above subsequent handover method.

It should be noted that terms "include", "comprise" or any other variations thereof herein are intended to contain non-exclusive inclusion, so that processes, methods, articles or apparatuses including a series of elements not only include the elements, but also include other elements which are not clearly listed, or also include inherent elements of the processes, methods, articles or apparatuses. In a case without more constraints, an element proceeded by the statement "comprise a(n)" does not preclude the existence of additional identical elements in the processes, methods, articles or apparatuses including the element. In addition, it should be noted that the scope of the method and apparatus in the embodiments of this application is not limited to performing functions in a sequence shown or discussed, and may further include performing functions in a basically simultaneous manner or in a reverse sequence according to related functions. For example, the described methods may be performed in a sequence different from the described sequence, and various steps may be added, omitted, or combined. In addition, features described with reference to some examples may be combined in other examples.

Through the descriptions of the above implementations, a person skilled in the art may clearly understand that the method of the above embodiments may be implemented by means of a computer software product and a necessary universal hardware platform, or by means of hardware. The computer software product is stored in a storage medium (such as an ROM, an RAM, a magnetic disk, or an optical disc), and includes a plurality of instructions for instructing a terminal or a network side device to perform the methods described in the embodiments of this application.

The embodiments of this application are described above with reference to the accompanying drawings. However, this application is not limited to the above specific implementations. The above specific implementations are merely exemplary rather than restrictive. A person of ordinary skill in the art may make implementations in many forms under the teaching of this application without departing from the spirit and scope of the claims of this application, and these implementations all fall within the protection of this application.

## Claims

1. A subsequent handover method, comprising:
executing a first operation by a terminal after handover to a first cell;
wherein the first operation comprises:
determining, by the terminal, to skip executing handover-related processing for a first candidate cell in response to that a key derivation parameter for next handover is absent; or,
executing, by the terminal, handover-related processing for the first candidate cell in response to that a key derivation parameter for the next handover is present; or,
performing, by the terminal after a radio link failure RLF or handover failure HOF occurs, cell selection and executing recovery-related processing according to a selected cell;
wherein an identification ID associated with the first candidate cell is different from an ID associated with the first cell, and the ID is used for indicating whether key update or packet data convergence protocol PDCP re-establishment needs to be executed in the case of handover or recovery to a target cell.

2. The method according to claim 1, wherein the determining, by the terminal, to skip executing handover-related processing for a first candidate cell in response to that a key derivation parameter for next handover is absent comprises:
stopping, by the terminal, handover condition evaluation on the first candidate cell in response to that the key derivation parameter for the next handover is absent; or,
prohibiting, by the terminal, handover to the first candidate cell in response to that the key derivation parameter for the next handover is absent and the first candidate cell meets a handover execution condition.

3. The method according to claim 1, wherein the executing, by the terminal, handover-related processing for the first candidate cell in response to that a key derivation parameter for the next handover is present comprises:
starting, by the terminal, handover condition evaluation on the first candidate cell in response to that the key derivation parameter for the next handover is present; or,
performing, by the terminal, handover to the first candidate cell in response to that the key derivation parameter for the next handover is present and the first candidate cell meets a handover execution condition.

4. The method according to claim 1, wherein the performing, by the terminal after an RLF or HOF occurs, cell selection and executing recovery-related processing according to a selected cell comprises:
after the RLF or HOF occurs, in response to that the key derivation parameter for the next handover is absent and the terminal selects the first candidate cell, executing, by the terminal, a radio resource control RRC connection re-establishment process, or, skipping executing, by the terminal, conditional handover CHO based link recovery or L1/L2-triggered mobility LTM based link recovery; or,
in a case that a network is configured with a first configuration and the RLF or HOF occurs, executing, by the terminal, CHO based link recovery in response to that the key derivation parameter for the next handover is absent and a cell selected by the terminal belongs to a second candidate cell in a CHO candidate cell set; or,
in a case that the network is configured with a second configuration and the RLF or HOF occurs, executing, by the terminal, LTM based link recovery in response to that the key derivation parameter for the next handover is absent and the cell selected by the terminal belongs to a second candidate cell in an LTM candidate cell set;
in a case that the network is configured with the first configuration and the RLF or HOF occurs, executing, by the terminal, the CHO based link recovery in response to that the key derivation parameter for the next handover is present and the cell selected by the terminal belongs to the second candidate cell in the CHO candidate cell set; or,
in a case that the network is configured with the second configuration and the RLF or HOF occurs, executing, by the terminal, the LTM based link recovery in response to that the key derivation parameter for the next handover is present and the cell selected by the terminal belongs to the second candidate cell in the LTM candidate cell set;
wherein an ID associated with the second candidate cell is the same as the ID associated with the first cell, the first configuration is used for indicating whether to execute the CHO based recovery processing after the RLF or HOF occurs, and the second configuration is used for indicating whether to execute the LTM based recovery processing after the RLF or HOF occurs.

5. The method according to claim 1 or 4, further comprising:
keeping a key unchanged by the terminal and skipping executing PDCP re-establishment in a case that an ID associated with a second cell is the same as the ID associated with the first cell; or,
deriving a key by the terminal based on the key derivation parameter and executing PDCP re-establishment in a case that the ID associated with the second cell is different from the ID associated with the first cell;
wherein the second cell is a cell selected in a CHO based recovery processing process or an LTM based recovery processing process.

6. A subsequent handover apparatus, comprising:
an execution module, configured to execute a first operation by a terminal after handover to a first cell;
wherein the first operation comprises:
determining, by the terminal, to skip executing handover-related processing for a first candidate cell in response to that a key derivation parameter for next handover is absent; or,
executing, by the terminal, handover-related processing for the first candidate cell in response to that a key derivation parameter for the next handover is present; or,
performing, by the terminal after an RLF or HOF occurs, cell selection and executing recovery-related processing according to a selected cell;
wherein an identification ID associated with the first candidate cell is different from an ID associated with the first cell, and the ID is used for indicating whether key update or PDCP re-establishment needs to be executed in the case of handover or recovery to a target cell.

7. The apparatus according to claim 6, wherein the execution module is specifically configured to:
stop, by the terminal, handover condition evaluation on the first candidate cell in response to that the key derivation parameter for the next handover is absent; or,
prohibit, by the terminal, handover to the first candidate cell in response to that the key derivation parameter for the next handover is absent and the first candidate cell meets a handover execution condition.

8. The apparatus according to claim 6, wherein the execution module is specifically configured to:
start, by the terminal, handover condition evaluation on the first candidate cell in response to that the key derivation parameter for the next handover is present; or,
perform, by the terminal, handover to the first candidate cell in response to that the key derivation parameter for the next handover is present and the first candidate cell meets a handover execution condition.

9. The apparatus according to claim 6, wherein the execution module is specifically configured to:
after the RLF or HOF occurs, in response to that the key derivation parameter for the next handover is absent and the terminal selects the first candidate cell, execute, by the terminal, an RRC connection re-establishment process, or, skip executing, by the terminal, conditional handover CHO based link recovery or LTM based link recovery; or,
in a case that a network is configured with a first configuration and the RLF or HOF occurs, execute, by the terminal, CHO based link recovery in response to that the key derivation parameter for the next handover is absent and a cell selected by the terminal belongs to a second candidate cell in a CHO candidate cell set; or,
in a case that the network is configured with a second configuration and the RLF or HOF occurs, execute, by the terminal, LTM based link recovery in response to that the key derivation parameter for the next handover is absent and the cell selected by the terminal belongs to a second candidate cell in an LTM candidate cell set;
in a case that the network is configured with the first configuration and the RLF or HOF occurs, execute, by the terminal, the CHO based link recovery in response to that the key derivation parameter for the next handover is present and the cell selected by the terminal belongs to the second candidate cell in the CHO candidate cell set; or,
in a case that the network is configured with the second configuration and the RLF or HOF occurs, execute, by the terminal, the LTM based link recovery in response to that the key derivation parameter for the next handover is present and the cell selected by the terminal belongs to the second candidate cell in the LTM candidate cell set;
wherein an ID associated with the second candidate cell is the same as the ID associated with the first cell, the first configuration is used for indicating whether to execute the CHO based recovery processing after the RLF or HOF occurs, and the second configuration is used for indicating whether to execute the LTM based recovery processing after the RLF or HOF occurs.

10. The apparatus according to claim 6 or 9, further comprising:
a processing module, configured to:
keep a key unchanged by the terminal and skip executing PDCP re-establishment in a case that an ID associated with a second cell is the same as the ID associated with the first cell; or,
derive a key by the terminal based on the key derivation parameter and execute PDCP re-establishment in a case that the ID associated with the second cell is different from the ID associated with the first cell;
wherein the second cell is a cell selected in a CHO based recovery processing process or an LTM based recovery processing process.

11. A terminal, comprising a processor and a memory, wherein the memory stores a program or an instruction runnable on the processor, and the program or the instruction, when executed by the processor, implements the steps of the subsequent handover method according to any one of claims 1 to 5.

12. A readable storage medium, wherein the readable storage medium stores a program or an instruction, and the program or the instruction, when executed by a processor, implements the steps of the subsequent handover method according to any one of claims 1 to 5.
